# EUROPEAN PATENT APPLICATION

(11) **EP 4 438 443 A1**
(43) Date of publication of application: **02.10.2024**
(21) Application number: 23210652.6
(22) Date of filing: 17.11.2023
(51) Int. Cl.: B62D 5/065, B62D 5/30, B62D 6/02, B62D 5/06

(54) **AN EMERGENCY STEERING PUMP WITH CLUTCH AND CONTROL METHOD THEREFORE**

(30) Priority: 30.03.2023 CN 202310331283
(71) Applicant: Quanxing Machining Group Co., Ltd., Zhejiang, Zhuji 311800 (CN)
(72) Inventor: Zhang, Wenxiang, Zhejiang, 311800 (CN); Liu, Dong, Zhejiang, 311800 (CN); Zhang, Ce, Zhejiang, 311800 (CN); Zhang, Qian, Zhejiang, 311800 (CN); Qiu, Hangfeng, Zhejiang, 311800 (CN)
(74) Representative: Paustian & Partner Patentanwälte mbB

(57) **Abstract**

The invention discloses a method of providing oil power steering and control in coordination with the engine oil pump. The emergency steering pump includes a pneumatic clutch and a displacement pump (10). The pneumatic clutch includes a clutch outer transmission shaft (8) and a clutch inner transmission shaft (9). The variable displacement pump (10) is provided with a pump shaft (101). The clutch outer transmission shaft (8) is connected to the gearbox and the clutch inner transmission shaft (9) is connected to the pump shaft (101), and a clutch disc (1, 2) is provided between the clutch outer transmission shaft (8) and the clutch inner transmission shaft (9). When the pneumatic clutch is not ventilated, the clutch disc (1, 2) is in a combined state, and the clutch outer transmission shaft (8) and the clutch inner transmission shaft (9) are connected. When the pneumatic clutch is ventilated, the clutch disc (1, 2) is in a disengaged state, and the clutch outer transmission shaft (8) and the clutch inner transmission shaft (9) are disconnected. The invention solves the problem of high fuel consumption, high noise, and the absence of emergency steering device when the traditional automobile or hybrid commercial vehicle runs at high speed.

## Description

### Technical field

The invention belongs to the technical field of automobile steering, in particular to a steering pump.

### Background

As the country has higher and higher requirements on the safety of automobile steering, and more and more commercial vehicles are becoming popular in densely populated cities. With the application of unmanned driving and steering by wire, the cost of electronic control integration of hydraulic emergency steering is relatively high.

During the use of traditional vehicles and hybrid vehicles, there are two main hidden dangers:
1. There is currently no redundant record for steering safety. That is to say, when the engine of the vehicle fails or the oil pump loses power transmission, the steering wheel will lose power steering, and sudden changes in the feel of the power steering will easily lead to safety accidents.
2. When the whole vehicle is running at high speed, the economy of steering and emergency cost are not as high as the existing mechanical products.

### Description

In response to the defects of the prior art, the technical problem to be solved by the present invention is to provide an emergency steering pump with a clutch and a control method, which solves the problems of high fuel consumption, high noise and the absence of an emergency steering device of a traditional automobile or a hybrid commercial vehicle when driving at high speed.

In order to solve the problems of the technologies described above, the present invention adopts the following technical solutions:
On the one hand, there is provided an emergency steering pump with a clutch, which coordinates with the engine oil pump to provide oil power steering. The emergency steering pump includes a pneumatic clutch and a variable displacement pump. The pneumatic clutch includes a clutch outer transmission shaft and a clutch inner transmission shaft. The variable displacement pump is provided with a pump shaft. The clutch outer transmission shaft is connected to a gearbox, and the clutch inner transmission shaft is connected to a pump shaft, and a clutch disc is provided between the clutch outer transmission shaft and the clutch inner transmission shaft;
when the pneumatic clutch is not ventilated, the clutch disc is in a combined state, and the clutch outer transmission shaft and the clutch inner transmission shaft are connected in transmission; when the pneumatic clutch is ventilated, the clutch disc is in a disengaged state, and the clutch outer transmission shaft and the clutch inner transmission shaft are disconnected.

Preferably, said clutch disk comprises a friction plate and a wave pad, said friction plate is connected to the outer transmission shaft of the clutch, said wave pad is connected to the inner transmission shaft of the clutch, and the friction plate and the wave pad are connected by transmission when the pneumatic clutch is not ventilated.

Preferably, said pneumatic clutch is provided with a piston, said piston is connected with a air nozzle for ventilation. The piston, after ventilated, pushes the wave pad in the direction away from the friction plate, so as to disengage the wave pad from the friction plate.

Preferably, said pneumatic clutch is further provided with a sub-clutch disk, a sliding bearing and a tie rod, said sub-clutch disk is connected to the sliding bearing, said tie rod is connected to the sub-clutch disk and the piston, and said wave pad is provided in the sub-clutch disk.

Preferably, said clutch outer transmission shaft is provided with a main clutch disk at the inner end of the clutch housing, and said friction plate is provided on the main clutch disk.

Preferably, said emergency steering pump is further provided with a rotational speed sensor, said main clutch disk is provided with a gear, said rotational speed sensor monitors the rotational speed of the gear in real time and sends an alarm signal when the rotational speed of the rotational speed sensor is 0.

Preferably, said clutch outer transmission shaft is provided with a first bearing between the shaft and the clutch housing, said clutch outer transmission shaft is provided with a bore at an inner end of the clutch housing, said outer transmission shaft bore is fitted with a second bearing, and the first end of said clutch inner transmission shaft is provided in the outer transmission shaft bore and rotationally supported on the second bearing.

Preferably, the second end of said inner transmission shaft of the clutch is provided with a bore, the end of said pump shaft is provided with a transmission section, and said transmission section is connected to the inner transmission shaft bore for transmission.

On the other hand, a method of controlling an emergency steering pump with a clutch is provided, wherein said emergency steering pump is controlled such that when the vehicle speed is higher than a set speed, the clutch outer and inner transmission shafts are connected by transmission and the pump shaft is driven to rotate, and the variable pump provides oil power steering;
when the vehicle speed is lower than the set speed, the clutch outer and inner transmission shafts are released from the transmission connection, the variable pump stops outputting, and the engine oil pump is switched to use the engine oil pump to provide the oil power steering.

Preferably, said set speed is 30km/h.

The technical solution adopted in this invention adopts a combination of oil pump and pneumatic clutch to provide steering assistance to the whole vehicle, and the oil pump adopts variable pump, in which the power source is provided by the gearbox transmission, and the maximum rotational speed of the product is 0-6500rpm, which exceeds the rotational speed point (0-4500rpm) of the steering oil pump driven by the engine of the traditional vehicle. When the vehicle speed exceeds 30km/h, it switches to pneumatic clutch pump for steering power, which provides the hydraulic source of steering power for the whole vehicle.

Therefore, it has the following beneficial effects:
Two power sources can be provided for steering, namely the original engine steering power source and the gearbox power source to greatly ensure the safety of steering.

When the variable pump is used to provide oil power steering at high speeds, as the speed of the variable pump increases, the stator inside is subjected to a greater eccentric force, and at this time, due to the eccentric force, the internal discharge volume of the pump is reduced, so the flow output is constant. As the variable pump generates less heat, it conforms to the design idea that the higher the rotational speed, the lower the heat generation, which can provide fuel economy for the whole vehicle, and thus can improve the economical fuel performance.

In addition, the pneumatic clutch is separated by ventilation during use, and the clutch disk is in the combined state (i.e., the maximum torque state) when ventilation is not available, so that the clutch also ensures the safety and reliability of steering when the whole vehicle loses the air source.

The specific technical solutions of the present invention and its beneficial effects will be exposed in detail in the following specific embodiments in conjunction with the accompanying drawings.

### Short description of the drawings

The present invention is further described below in connection with the accompanying drawings and specific embodiments:

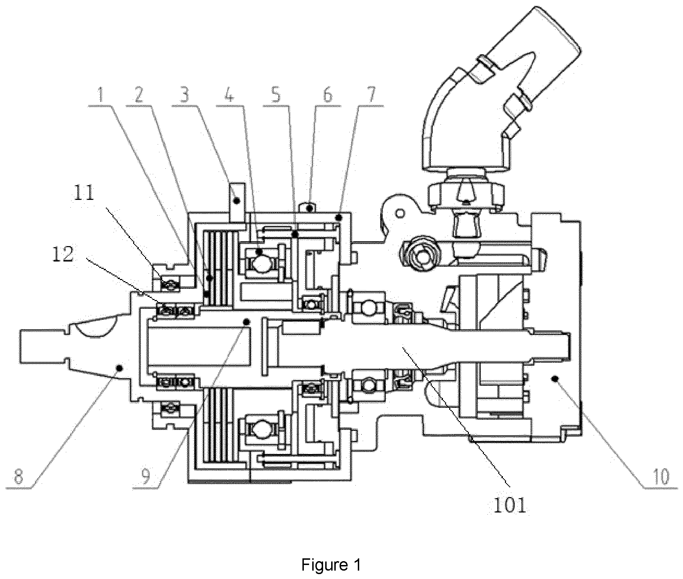

Figure 1 shows a schematic diagram of the structure of an embodiment of the present disclosure.

### Detailed description of the figure and of specific embodiments

The technical solutions of the embodiments of the present invention are explained and illustrated below in conjunction with the accompanying drawings of the embodiments, but the following embodiments are only the preferred embodiments of the present invention, not all. Based on the embodiments in the embodiment, other embodiments obtained by the person skilled in the art without making creative labor fall within the scope of protection of the present invention.

Those skilled in the art may understand that, without conflict, the following embodiments and features in embodiments may be combined with each other.

Terms used in the present invention are used solely for the purpose of describing particular embodiments and are not intended to limit the invention. For example, the following terms such as "inside", "outside", etc. indicating orientation or positional relationships are based only on the orientation or positional relationships shown in the accompanying drawings, and are used only for the purpose of facilitating the description of the present invention and simplifying the description, and are not intended to indicate or imply that the referred device/component must have a particular orientation or constructed and operated in a particular orientation, and therefore cannot be construed as a limitation of the present invention.

In the present invention, unless otherwise clearly specified and limited, terms such as "installation", "connection" and "fixation" should be understood in a broad sense, for example, it may be a fixed connection, a detachable connection, or an integral connection; it may be a mechanical connection or an electrical connection; it may be a direct connection or an indirect connection through an intermediary. Those of ordinary skill in the art can understand the specific meanings of the above terms in the present invention according to specific situations.

The technical solution adopted in the embodiment of the present invention adopts a combination of an oil pump and a pneumatic clutch to provide steering power to the vehicle, wherein the power source is provided by the gearbox transmission, and the maximum speed is 0-6500 rpm, which exceeds the rotation speed point (0-4500 rpm) of the steering oil pump driven by the traditional vehicle engine. When the speed of the vehicle exceeds 30km/h, the pneumatic clutch pump is switched for steering power, providing the hydraulic source of the steering power for the vehicle.

As shown in FIG. 1, this embodiment provides an emergency steering pump with a clutch, and the emergency steering pump coordinates with the engine oil pump to provide oil power steering. The emergency steering pump includes a pneumatic clutch and a variable displacement pump 10, and the pneumatic clutch includes a clutch housing 7, a clutch outer transmission shaft 8 and a clutch inner transmission shaft 9. Wherein, a first bearing 11 is provided between the clutch outer transmission shaft 8 and the clutch housing 7, and the clutch outer transmission shaft 8 is provided with an outer transmission shaft hole at one end inside the clutch housing, and a second bearing 12 is installed in the outer transmission shaft hole, and the first end of the clutch inner transmission shaft 9 is arranged in the outer transmission shaft hole and is rotatably supported by the second bearing. The variable displacement pump 10 is provided with a pump shaft 101, the clutch outer transmission shaft 8 is connected to the gearbox, the clutch inner transmission shaft 9 is connected to the pump shaft 101, and a clutch disc is arranged between the clutch outer transmission shaft 8 and the clutch inner transmission shaft 9. The end of the second end of the clutch inner transmission shaft is provided with an inner transmission shaft hole, and the end of the pump shaft is provided with a transmission part, and the transmission part is connected to the inner transmission shaft hole for transmission. Specifically, it can be connected by a spline or a flat key, or connected by other means.

When the pneumatic clutch is not ventilated, the clutch disc is in a combined state, and the clutch outer transmission shaft and the clutch inner transmission shaft are connected in transmission; when the pneumatic clutch is ventilated, the clutch disc is in a disengaged state, and the clutch outer transmission shaft and the clutch inner transmission shaft are disconnected.

The control method of the above-mentioned emergency steering pump with clutch is as follows:
When the vehicle speed is higher than the set speed, the clutch outer transmission shaft is connected to the clutch inner transmission shaft, and drives the pump shaft to rotate, and the variable pump provides oil power steering;
when the vehicle speed is lower than the set speed, the transmission connection between the clutch outer transmission shaft and the clutch inner transmission shaft is released, the output of the variable displacement pump is stopped, and the engine oil pump is switched to provide oil power steering.

At high speed, the variable pump is used to provide oil power steering. As the speed of the variable pump increases, the eccentric force on the internal stator is greater. At this time, due to the eccentric force, the internal discharge of the oil pump is reduced, so the flow output is constant. The design idea that the higher the speed, the smaller the calorific value of the variable pump can provide fuel economy for the whole vehicle, thus improving the fuel economy performance.

In this embodiment, the clutch disc includes a friction plate 1 and a wave pad 2, the friction plate is connected to the outer transmission shaft of the clutch, and the wave pad is connected to the inner transmission shaft of the clutch, and the friction plate and the wave pad are connected by transmission when the pneumatic clutch is not ventilated. The outer transmission shaft of the clutch is provided with a main clutch disc at an inner side end of the clutch housing, and the friction plate 1 is arranged on the main clutch disc.

Further, the pneumatic clutch is provided with a piston 5, and the piston is connected with an air nozzle 6 for introducing air. After the air is introduced, the piston pushes the wave pad to move away from the friction plate, so that the wave pad is separated from the friction plate. The pneumatic clutch is also provided with a sliding bearing 4, an sub-clutch disc and a pull rod, the sub-clutch disc is connected with the sliding bearing, the pull rod is connected with the sub-clutch disc and the piston, and the wave pad is arranged on the sub-clutch disc. The sliding bearing and the sub-clutch disc are integrated. After the 0.6MPa air is introduced from the air nozzle, the air chamber expands, the piston moves in a straight line, and the pull rod connected to the piston also moves, pulling the sub-clutch disc and the sliding bearing moves accordingly. At this time, the wave pad on the sub-clutch disc is separated from the friction plate, no torque is transmitted, and the clutch is disengaged.

Further, a speed sensor is also provided. The main clutch disc is provided with a gear, and the speed sensor is provided with a magnetic induction probe to monitor the speed of the gear in real time, thereby monitoring whether the clutch is slipping. This feedback speed basically matches the speed of the gearbox, so as to ensure that the clutch does not fail. When the clutch disengages, it means that the oil pump is not working, and the speed is 0. Therefore, the failure of the pneumatic clutch can be monitored in real time to meet the alarm function of the vehicle instrument.

In this embodiment, the set speed is 30km/h. When the speed is 30km/h, the maximum pressure of the oil pump is generally not used at this time, and the vehicle is prone to rollover. Therefore, according to multiple test evaluations, the maximum pressure of the variable pump is 12MPa, which is just enough for the normal steering demand of the vehicle at 30km/h. If the vehicle stops on the spot, the general steering demand pressure is about 15Mpa.

The above is only a specific embodiment of the present invention, but the scope of protection of the present invention is not limited thereto. Those skilled in the art should understand that the present invention includes but is not limited to the accompanying drawings and the content described in the above specific embodiments. Any modifications that do not depart from the functional and structural principles of the present invention will be included in the scope of the claims.

### Reference signs

1 - friction plate
2 - wave pad
3 - speed sensor
4 - sliding bearing
5 - piston
6 - air nozzle
7 - clutch housing
8 - clutch outer transmission shaft
9 - clutch inner transmission shaft
10 - variable pump
11 - first bearing
12 - second bearing
101 - pump shaft

## Claims

1. An emergency steering pump with a clutch, coordinating with an engine oil pump to provide oil power steering, **characterized in that** the emergency steering pump includes a pneumatic clutch and a variable displacement pump; the pneumatic clutch includes a clutch outer transmission shaft and a clutch inner transmission shaft; the variable displacement pump is provided with a pump shaft; the clutch outer transmission shaft is connected to a gearbox, the clutch inner transmission shaft is connected to a pump shaft, and a clutch disc is arranged between the clutch outer transmission shaft and the clutch inner transmission shaft;
when the pneumatic clutch is not ventilated, the clutch disc is in a combined state, and the clutch outer transmission shaft and the clutch inner transmission shaft are connected in transmission; when the pneumatic clutch is ventilated, the clutch disc is in a disengaged state, and the clutch outer transmission shaft and the clutch inner transmission shaft are disconnected.

2. The emergency steering pump with clutch according to claim 1, wherein the clutch disc includes a friction plate and a wave pad, the friction plate is connected to the clutch outer transmission shaft, the wave pad is connected to the clutch inner transmission shaft, and the friction plate and the wave pad are connected in transmission when the pneumatic clutch is not ventilated.

3. The emergency steering pump with a clutch according to claim 2, wherein the pneumatic clutch is provided with a piston, and the piston is connected with an air nozzle for introducing air and the piston pushes the wave pad to move away from the friction plate after the air is passed in, so that the wave pad is separated from the friction plate.

4. The emergency steering pump with a clutch according to claim 3, wherein the pneumatic clutch is also provided with an auxiliary clutch disc, a sliding bearing and a pull rod, the auxiliary clutch disc is connected to the sliding bearing, the pull rod is connected to the auxiliary clutch disc and the piston, and the wave pad is arranged on the auxiliary clutch disc.

5. The emergency steering pump with clutch according to claim 2, **characterized in that**, the outer transmission shaft of the clutch is provided with a main clutch disc at an inner end of the clutch housing, and the friction plates are arranged on the main clutch disc.

6. The emergency steering pump with a clutch according to claim 5, wherein the emergency steering pump is also provided with a rotational speed sensor, the main clutch disc is provided with a gear, and the rotational speed sensor monitors the rotational speed of the gear in real time, and sends an alarm signal when the rotational speed of the rotational speed sensor is 0.

7. The emergency steering pump with a clutch according to claim 1, wherein a first bearing is provided between the clutch outer transmission shaft and the clutch housing, an outer transmission shaft hole is provided at the inner side end of the clutch housing, and a second bearing is installed in the outer transmission shaft hole, and the first end of the clutch inner transmission shaft is arranged in the outer transmission shaft hole and rotatably supported by the second bearing.

8. The emergency steering pump with clutch according to claim 7, **characterized in that**, the end of the second end of the clutch inner transmission shaft is provided with an inner transmission shaft hole, and the end of the pump shaft is provided with a transmission part, and the transmission part is connected to the inner transmission shaft hole for transmission.

9. A control method for an emergency steering pump with a clutch, **characterized in that** the emergency steering pump described in any one of claims 1 to 8 is controlled, when the vehicle speed is higher than the set speed, the clutch outer transmission shaft and the clutch inner transmission shaft are connected by transmission, and drive the pump shaft to rotate, and the variable pump provides oil power steering;
when the vehicle speed is lower than the set speed, the transmission connection between the clutch outer transmission shaft and the clutch inner transmission shaft is disconnected, the output of the variable displacement pump is stopped, and the engine oil pump is switched to provide oil power steering.

10. The emergency steering pump control method with clutch according to claim 9, **characterized in that**, the set speed is 30km/h.
